# EUROPÄISCHE PATENTANMELDUNG

(11) **EP 1 103 822 A2**
(43) Veröffentlichungstag der Anmeldung: **30.05.2001**
(21) Anmeldenummer: 00123299.0
(22) Anmeldetag: 27.10.2000
(51) Int. Cl.: G01S 7/295, G01S 7/292

(54) **Echtzeit-Datensortierung und -reduktion**

(30) Priorität: 25.11.1999 DE 19956625
(71) Anmelder: DaimlerChrysler AG, 70567 Stuttgart (DE)
(72) Erfinder: Neuhaus, Werner, 89275 Elchingen (DE); Barthel, Markus, 89231 Neu-Ulm (DE)

(57) **Zusammenfassung**

Ein Verfahren zum Filtern von Daten umfaßt das Erstellen eines Zellsteuerblock-Datenfelds zur Bildung eines Histogramms, wobei das Histogramm eine Vielzahl von Zellsteuerblocks aufweist, und wobei jeder Zellsteuerblock der Vielzahl von Zellsteuerblocks einer entsprechenden, als Kernzelle bzw. Nichtkernzelle sowie benutzt bzw. unbenutzt klassifizierbaren Zelle entspricht. Jeder Zellsteuerblock der Vielzahl von Zellsteuerblocks weist einen Zellenzähler auf, ein erstes Verknüpfungsswort, das auf den Anfang einer Datenausgabekette verweist, wenn die entsprechende Zelle benutzt und Kernzelle ist sowie ein zweites Verknüpfungsswort das auf eine zugehörige Kernzelle verweist, wenn die entsprechende Zelle benutzt und Nichtkernzelle ist. Das Histogramm wird in Abhängigkeit von wenigstens einem Parameter, einschließlich eines ersten Parameters gebildet und weist für den ersten Parameter einen ersten unteren Grenzwert und einen ersten oberen Grenzwert auf. Eingangsdaten werden in Abhängigkeit von dem wenigstens einen Parameter zur Bildung einer Vielzahl von Ereignisbeschreibungsblocks empfangen von, wobei der wenigstens eine Parameter den ersten Parameter einschließt. Dann ermittelt das Verfahren, ob jeder Ereignisbeschreibungsblock der Vielzahl von Ereignisbeschreibungsblocks einem Zellsteuerblock der Vielzahl von Zellsteuerblocks in dem Histogramm entspricht, und ermittelt in diesem Falle, ob die entsprechende Zelle des einen Zellsteuerblocks benutzt oder unbenutzt ist, und ändert, falls die entsprechende Zelle unbenutzt ist, eine Klassifizierung der entsprechenden Zelle im Zellsteuerblocks von unbenutzt in benutzt. Dann werden die Eingangsdaten in Abhängikeit von dem ersten und zweiten Verknüpfungsswort an ein Ausgabe-Datenfeld ausgegeben.

## Beschreibung

### TECHNISCHES GEBIET

Die Erfindung betrifft Datenverarbeitungssysteme und -verfahren im allgemeinen sowie, im spezielleren, ein Verfahren zur Online-Vorsortierung und -Reduktion von zu verarbeitenden Daten.

### STAND DER TECHNIK

Datenverarbeitungssysteme empfangen typischerweise Informationen, die anschließend verarbeitet werden. So empfangen beispielsweise Empfangsanlagen häufig Impulsdaten aus einem breiten Frequenzbereich in unterschiedlichen Richtungen.

Wie in "Pulse Radar (dt.: Impulsradar)" von Marvin L. Belcher und Josh T. Nessmith (CRC Press LLC, 1997) beschrieben, das durch Bezugnahme hiermit Bestandteil dieses Dokuments wird, umfaßt die digitale Verarbeitung in einem Radarsystem häufig Signalverarbeitung und Datenverarbeitung. Über eine Antenne empfangene Signaldaten werden in digitaler Form einem Signalprozessor zugeführt, wo die Signaldaten zur Verringerung des Rechenaufwands mithilfe einer schnellen Fourier-Transformation (FFT) gefiltert werden. Die Ausgangsinformation des Signalprozessors kann mit Entfernungstorschaltungen und Doppler-Filtern beschrieben werden, entsprechend dem Entfernungs- bzw. Doppler-Auflösungsvermögen. Die Ausgangsinformation wird dann einem Radar-Datenverarbeitungssystem zugeführt, typischerweise ein Universalrechner mit einem Echtzeit-Betriebssystem. Diese Datenverarbeitungssysteme können von Mikrocomputern bishin zu Großrechnern reichen, je nach den Erfordernissen des Radarsystems.

Das Filtern der Radardaten mittels der schnellen Fourier-Transformation wird jedoch in gleicher Weise auf einen Eingangsdatenstrom angewendet, welcher nicht vorsortiert bzw. vorgefiltert ist.

Andere Datenverarbeitungssysteme reduzieren oder komprimieren Daten mithilfe von Komprimierungsverfahren. Ton- und Bild-Eingangssignale können in digitale Signale umgewandelt werden, die dann zum Beispiel mittels eines beispielsweise auf speziellen Wellenformen oder Fourier-Transformationen beruhenden Codierungsverfahrens komprimiert werden. Diese Codierungs- bzw. Komprimierungsverfahren reduzieren somit die den Ton- und Bildsignalen entsprechende Menge digitaler Daten, so daß die Daten schneller über eine bestimmte Bandbreite übertragen und an einem Ausgang adäquat wiedergegeben werden können. Diese Codierungssysteme werden in gleicher Weise auch auf einen Eingangsdatenstrom angewendet, wobei keine intelligente Vorsortierung der Daten oder Reduzierung redundanter Daten durch sie durchgeführt wird.

### VORTEILE DER ERFINDUNG

Es ist vorteilhaft, eine Vorsortierung der Daten und Reduzierung redundanter Daten durchzuführen, so daß der nachfolgende Rechenaufwand verringert werden kann. Diese Vorsortierung und Verringerung ist besonders vorteilhaft, wenn in einer Signalumgebung hoher Dichte gearbeitet wird. Die Erfindung schafft ein Verfahren zur Datensortierung und -reduktion, bei der zur Bildung eines Histogramms ein sogenanntes Zellsteuerblock-Datenfeld erstellt wird. Das Histogramm weist somit eine Vielzahl von Zellsteuerblocks auf, die jeweils einer entsprechenden, als Kernzelle bzw. Nichtkernzelle sowie benutzt bzw. unbenutzt klassifizierbaren Zelle entsprechen. Jeder Zellsteuerblock der Vielzahl von Zellsteuerblocks weist einen Zellenzähler auf, wobei der Zellenzähler inkrementiert wird, wenn die entsprechende Zelle durch ein Eingangsereignis erkannt wird. Ferner weist jeder Zellsteuerblock der Vielzahl von Zellsteuerblocks ein erstes Verknüpfungswort zum Verweis auf den Anfang einer Datenausgabekette auf, wenn die entsprechende Zelle Kernzelle ist, und jeder Zellsteuerblock der Vielzahl von Zellsteuerblocks weist ein zweites Verknüpfungsswort zum Verweis auf eine zugehörige Kernzelle auf, wenn die entsprechende Zelle benutzt und Nichtkernzelle ist. Das Histogramm ist eine Funktion von wenigstens einem Parameter, einschließlich eines ersten Parameters, und weist für den ersten Parameter einen ersten unteren Grenzwert und einen ersten oberen Grenzwert auf. Die Eingangsdaten werden zur Bildung einer Vielzahl von Ereignisbeschreibungsblocks in Abhängigkeit von dem wenigstens einen Parameter empfangen, wobei der wenigstens eine Parameter den ersten Parameter einschließt. Sodann wird durch das Verfahren ermittelt, ob jeder Ereignisbeschreibungsblock der Vielzahl von Ereignisbeschreibungsblocks einem Zellsteuerblock der Vielzahl von Zellsteuerblocks in dem Histogramm entspricht, und ermittelt in diesem Falle, ob die entsprechende Zelle des einen Zellsteuerblocks benutzt oder unbenutzt ist. Ist die entsprechende Zelle unbenutzt, so wird eine Klassifizierung der entsprechenden Zelle im Zellsteuerblock von unbenutzt in benutzt geändert. Die Eingangsdaten der Vielzahl von Ereignisbeschreibungsblocks werden dann in Abhängikeit von dem ersten und zweiten Verknüpfungsswort an ein Ausgabe-Datenfeld ausgegeben. Somit werden die Eingangsdaten in um Kernzellen gebildete Datenausgabeketten sortiert. Diese Sortierung kann insbesondere von Vorteil sein bei der Verringerung des Rechenaufwands für Erkennungssysteme wie Radarwarneinrichtungen, elektronische unterstützende Meßeinrichtungen sowie elektronische Aufklärungseinrichtungen, da Ereignisse mit ähnlichen Parameterwerten gruppiert werden können.

Das Verfahren kann vorsehen, daß wenigstens ein Parameter zusätzlich einen zweiten Parameter umfaßt. Die gewünschten Parameter können vorteilhaft während einer Initialisierungszeit ausgewählt werden.

Das Verfahren kann weiterhin vorsehen, daß die Ausgabe der Eingangsdaten nach einer gewissen Zeitspanne, einer sogenannten Verweilzeit erfolgt. Diese Zeitspanne ist vorgebbar und kann je nach Anwendung von Millisekunden bis zu Stunden oder Tagen reichen. Wird das erfindungsgemäße Verfahren beispielsweise in einem Erkennungssystem eingesetzt, so kann die Vorsortierung von Daten bei der Erkennung von i astronomischen Ereignissen vorteilhaft sehr lange Verweilzeiten aufweisen, wogegen einige Radaranwendungen vorteilhaft sehr kurze Verweilzeiten aufweisen können. Während einer Initialisierungszeit vor der Verweilzeit wird die Vielzahl von Zellsteuerblocks vorteilhaft als unbenutzt klassifiziert.

Während der Verweilzeit kann ein Ereignis erfolgen, das einem ersten Zellsteuerblock der Zellsteuerblocks entspricht. Dieser erste Zellsteuerblock ist im Histogramm umgeben von Umgebungszellsteuerblocks der Vielzahl von Zellsteuerblocks. Das erfindungsgemäße Verfahren kann dann beinhalten, daß, wenn der erste Zellsteuerblock als unbenutzt bestimmt wird, weiterhin ermittelt wird, ob wenigstens einer der Umgebungszellsteuerblocks benutzt ist. Wenn alle Umgebungszellsteuerblocks unbenutzt sind, so kennzeichnet der erste Zellsteuerblock seine entsprechende Zelle als Kernzelle. Sind jedoch einer oder mehrere der Umgebungszellsteuerblocks benutzt, so wird der erste Zellsteuerblock mit der Kernzelle der ersten benutzten Umgebungszelle verknüpft. Wird der erste, durch ein Ereignis erkannte Zellsteuerblock als benutzt bestimmt, so wird weiterhin ermittelt, ob der erste Zellsteuerblock einer Kernzelle oder einer Nichtkernzelle entspricht. Handelt es sich bei dem ersten Zellsteuerblock um eine Kernzelle, und wird eine durch das erfindungsgemäße Verfahren festgelegte Datengrenze überschritten, so wird das Ereignis nur gezählt; weitere Maßnahmen werden nicht ergriffen, und die nächsten Eingangsdaten werden gelesen. Entspricht der erste Zellsteuerblock einer Nichtkernzelle, so wird für den ersten Zellsteuerblock eine Verknüpfung erstellt zur Anzeige der zugehörigen Kernzelle. Auf diese Weise werden die Ereignisse sortiert, so daß Kern- und zugehörige Zellen gruppiert werden, damit sie als Datenketten mit ähnlichen Parametereigenschaften ausgegeben werden können. Die Datenreduktion erfolgt bis an die Grenzen.

Das Histogramm kann n-dimensional sein, wobei n eins oder größer eins ist. Das Histogramm ist vorzugsweise mindestens zweidimensional, da für die meisten Anwendungen mindestens zwei Parameter beim Sortieren und Gruppieren der Daten wünschenswert sind.

Somit kann das Histogramm zwischen dem ersten unteren Grenzwert und dem ersten oberen Grenzwert in 2^{k} Spalten unterteilt werden, wobei k eine Anzahl von Bits des ersten Parameters darstellt, die bei der Bestimmung, ob jeder Ereignisbeschreibungsblock der Vielzahl von Ereignisbeschreibungsblocks einem Zellsteuerblock der Vielzahl von Zellsteuerblocks entspricht, verwendet werden.

Das erfindungsgemäße Verfahren kann vorteilhaft in einem Erkennungssystem eingesetzt werden, wie beispielsweise einer Anlage, bei der Radarwarneinrichtungen, elektronische unterstützende Meßeinrichtungen oder elektronische Aufklärungseinrichtungen Anwendung finden. Die Parameter des Verfahrens können somit eine von dem Erkennungssystem erfaßte fortgepflanzte Frequenz von Signalen oder Wellen sowie eine erfaßte Ankunftsrichtung der Signale oder Wellen umfassen. Somit wird durch die Erfindung eine Reduzierung redundanter bzw. nicht erforderlicher Daten in hochdichten Signalumgebungen von Erkennungssystemen geschaffen. In elektromagnetischen Umgebungen, in denen die Signaldichte mehrere Millionen Ereignisse pro Sekunde überschreiten kann, können durch diese Verringerung des erforderlichen Verarbeitungsaufwands Überlastungen in nachfolgenden Datenverarbeitungsanlagen ausgeschlossen oder reduziert werden. Dies trifft insbesondere dann zu, wenn die Einrichtung einen breiten Momentan-Radiofrequenz- und Winkelbereich abdeckt und um so mehr, wenn Hochleistungs-Radiofrequenzsender verwendet werden.

Die Eingangsdaten in Form von Ereignisbeschreibungsblocks der Erfindung können von einer Parameter- bzw. Signalmeßeinrichtung empfangen werden, wie beispielsweise einem Impulsextraktor. Bei dem Ereignisbeschreibungsblock handelt es sich um einen mindestens einen Parameter umfassenden Vektor. In einer bevorzugten Ausgestaltung ist der Ereignisbeschreibungsblock ein Vektor, der mindestens zwei Parameter umfaßt, wie beispielsweise die Frequenz des empfangenen Signals und der Winkel bzw. die erfaßte Richtung des empfangenen Signals. Andere Parameter, die in dem Ereignisbeschreibungsblock enthalten sein könnten, umfassen die Amplitude des Signals, die Ankunftszeit sowie die Impulsbreite, in der das Signal empfangen wird. Die Ereignisbeschreibungsblocks können vor der Sortierung in einem als Puffer wirkenden FIFO-Speicher gespeichert werden. Das erfindungsgemäße Verfahren kann als Satz von einem Prozessor ausführbarer Befehle in einem Speichermedium wie beispielsweise einem Rechnerspeicher stehen.

### ZEICHNUNG

Die Erfindung wird unter Bezugnahme auf die nachstehenden Zeichnungen noch näher beschrieben. Es zeigen:
- Fig. 1: ein allgemeines Funktionsdiagramm des erfindungsgemäßen Verfahrens,
- Fig. 2: die das Histogramm bildenden Zellsteuerblocks gemäß der vorliegenden Erfindung,
- Fig. 3: einen Ereignisbeschreibungsblock,
- Fig. 4: ein Funktionsdiagramm des Zellsteuerblock-Zuordnungsschritts gemäß der vorliegenden Erfindung,
- Fig. 5: das erfindungsgemäße Verfahren in verallgemeinerter Form,
- Fig. 6: den Aufbau eines Zellsteuerblocks,
- Fig. 7: einen Überblick über das erfindungsgemäße Verfahren,
- Fig. 8: die Bestimmung, ob einen Zelle benutzt, d.h. neu, oder unbenutzt, d.h. ungleich null ist,
- Fig. 9: die Bestimmung des Zustands der Umgebungszellen einer neuen Zelle,
- Fig. 10: die Bestimmung der Auswahl eines von drei Unterverfahren zur Sortierung von neuen, d.h. unbenutzten Zellen,
- Fig. 11: ein Funktionsdiagramm des "tatsächlich neu"-Unterverfahrens der Fig. 9,
- Fig. 12: ein Funktionsdiagramm des "neu und verbinden"-Unterverfahrens der Fig. 9,
- Fig. 13: ein Funktionsdiagramm des "neu und verbinden und vereinigen"-Unterverfahrens der Fig. 9 insoweit es von dem Unterverfahren der Fig. 12 abweicht,
- Fig. 14: ein Funktionsdiagramm des Aktualisierungs-Unterprogramms für eine Kernzelle,
- Fig. 15: ein Funktionsdiagramm des Aktualisierungs-Unterprogramms für eine Nichtkernzelle, und
- Fig. 16: ein Ausgabe-Datenfeld der vorliegenden Erfindung.

### AUSFÜHRUNG DER ERFINDUNG

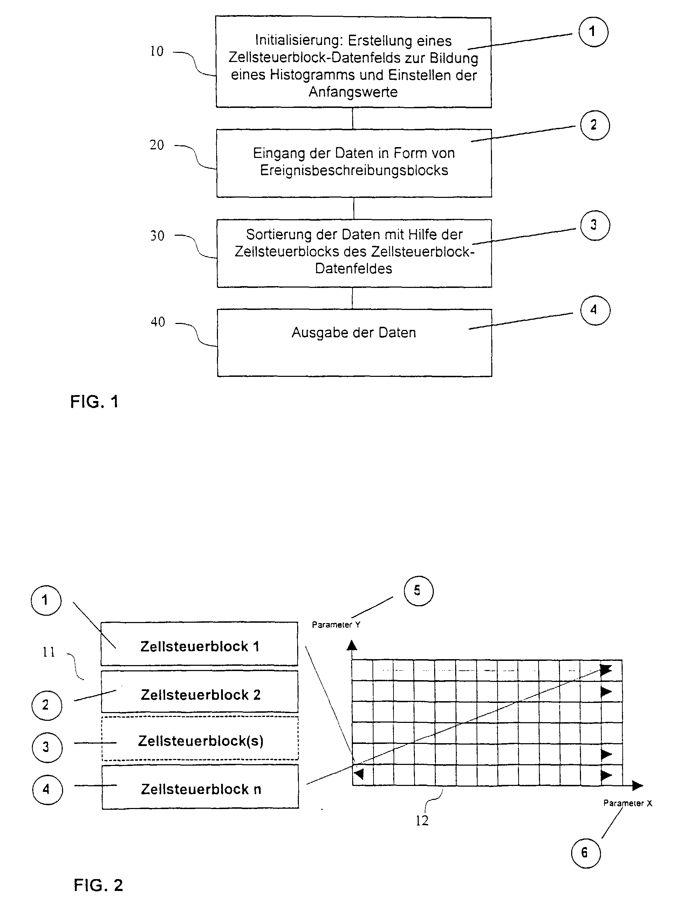

Fig. 1 zeigt ein allgemeines Funktionsdiagramm der Erfindung, das unter Bezugnahme auf die anderen Figuren noch näher beschrieben wird. Zunächst wird während einer Initialisierungszeit 10 ein Zellsteuerblock-Datenfeld zur Erstellung eines Histogramms gebildet, mit dem anschließend Eingangsdaten mittels Zellsteuerblocks sortiert werden. Diese Zellsteuerblocks enthalten jeweils Informationen zur Datensortierung und -reduktion für eine bestimmte Stelle, bzw. eine einen Wertebereich von mindestens einem Parameter abdeckende entsprechende Zelle. Die Daten werden dann in einem Eingabeschritt 20 eingegeben und dann in einem Sortierschritt 30 auf der Grundlage der Zellsteuerblocks sortiert, so daß Datenketten mit ähnlichen Parametereigenschaften entstehen. Die sortierten Daten werden dann in einem Ausgabeschritt 40 ausgegeben.

In Fig. 2 wird die Bildung des Histogramms während der Initialisierungszeit 10 näher beschrieben. Während der Initialisierungszeit 10 wird ein Datenfeld 11 von Zellsteuerblocks 1, 2...n zur Bildung eines Histogramms 12 erstellt.

Das Histogramm 12 hat beispielsweise 2 Dimensionen, welche einen ersten Parameter X und einen zweiten Parameter Y darstellen. Das Histogramm kann jedoch auch eine oder mehr als zwei Dimensionen aufweisen. Die Wahl der Parameter sowie der Größe der durch den Zellsteuerblock gesteuerten Zellen kann je nach Anwendung variieren. Beispielsweise kann für einen Bereich von Frequenzen und einen Bereich von erfaßten Richtungswinkeln ein auf Frequenz und erfaßter Richtung eines empfangenen Signals basierendes zweidimensionales Histogramm erstellt werden. Der Frequenzbereich hat somit eine untere Grenze und eine obere Grenze, und der Winkelbereich hat ebenfalls eine untere Grenze und eine obere Grenze, beispielsweise null bis 360 Grad. Der Frequenzbereich ist N-fach und der Winkelbereich M-fach teilbar so daß ein Histogramm M auf N erstellt wird, wodurch M mal N Zellsteuerblocks entstehen. M könnte beispielsweise 32 und der Winkelbereich 360 Grad betragen, so daß jede Zelle in Winkelrichtung 11,25 Grad umfaßt. Andere Parameter könnten Amplitude, Ankunftszeit und Impulsbreite umfassen, und das Histogramm könnte auch ein-, drei- oder mehrdimensional sein.

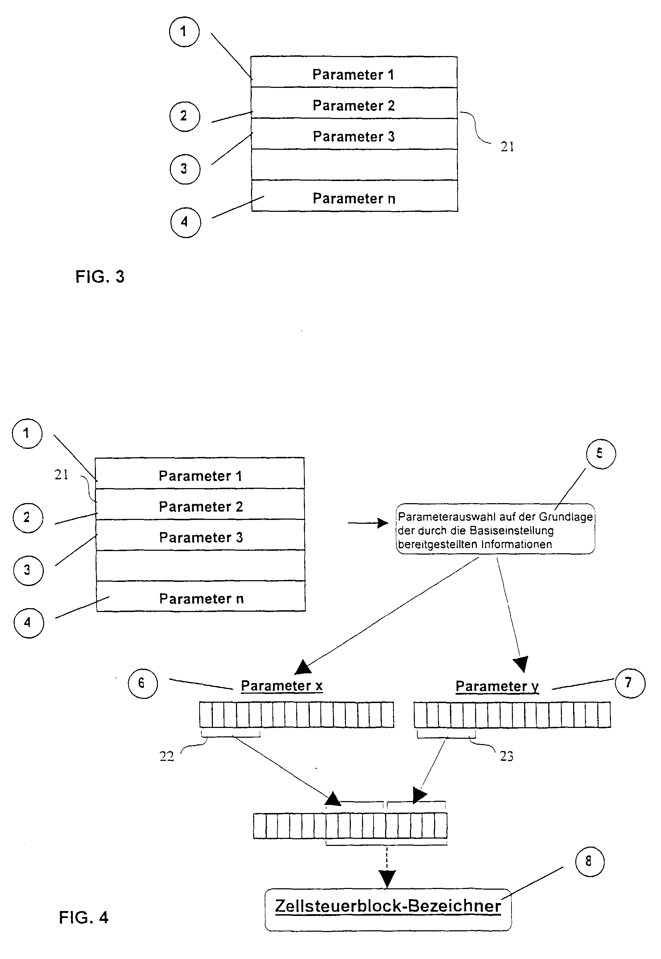

Im Sortierschritt 30 der Fig. 1 werden mit den Zellsteuerblocks des Histogramms die Eingangsdaten sortiert und reduziert, wie noch näher beschrieben wird. Die Eingangsdaten werden im Eingabeschritt 20 zunächst in Form von Ereignisbeschreibungsblocks empfangen. Der Aufbau eines Ereignisbeschreibungsblocks 21 ist in Fig. 3 dargestellt. Bei dem Ereignisbeschreibungsblock 21 handelt es sich um ein Datenfeld, wobei das Datenfeld wenigstens einen Parameter aufweist. Der Ereignisbeschreibungsblock kann beispielsweise ein eine Frequenz und eine erfaßte Richtung eines empfangenen Radarsignals beinhaltendes zweidimensionales Datenfeld sein.

Während der Verweilzeit wird, beispielsweise von einem Impulsextraktor, in Abhängigkeit von den Parametern ein Datenstrom empfangen und zur Sortierung in Form von Ereignisbeschreibungsblocks übertragen. Die Daten werden vorzugsweise in einem FIFO-Speicher gespeichert.

Während eines Zellsteuerblock-Zuordnungsschritts des Sortierschrittes 30 der Fig. 1 werden die Ereignisbeschreibungsblocks dann einem entsprechenden Zellsteuerblock des Histogramms zugeordnet. Wie in Fig. 4 gezeigt, werden jeweils die Parameter x und y des Ereignisbeschreibungsblocks 21 aus dem Ereignisbeschreibungsblock ausgewählt. Diese, von dem Ereignisbeschreibungsblock 21 verwendeten Parameter werden bei der Initialisierung festgelegt und entsprechen Parametern des bei der Initialisierung erstellten Histogramms. Mit den als höchstwertigst definierten Bits 22, 23 der Ereignisbeschreibungsblock-Parameter x bzw. y wird dann der entsprechende Zellsteuerblock im Histogramm zugeordnet und ein Ereignis registriert.

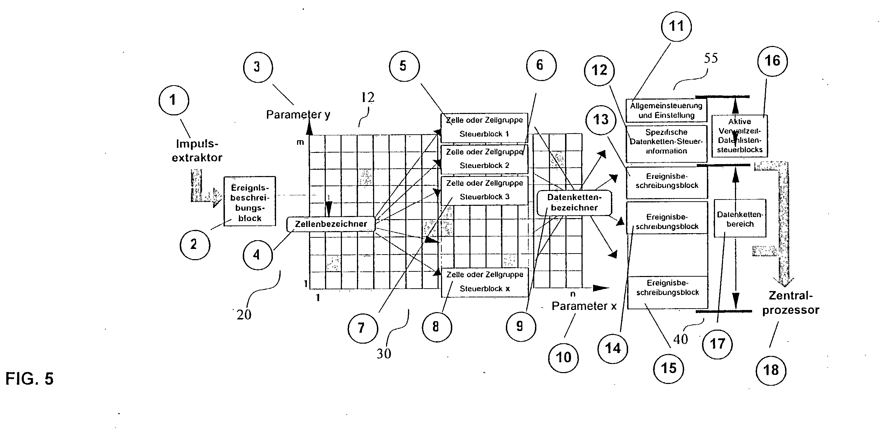

Fig. 5 zeigt einen Überblick über den Eingabeschritt 20, den Sortier- und Filterschritt 30 sowie den Ausgabeschritt 40. Alle Ereignisbeschreibungsblocks werden den Zellsteuerblocks des Histogramms 12 zugeordnet. Die Zellsteuerblocks weisen eine Verknüpfung zu einem Ausgabe-Datenfeld 55 auf, so daß dann nur bestimmte Ereignisbeschreibungsblocks in Abhängigkeit von bestimmten Datenketten-Steuerinformationen ausgegeben werden.

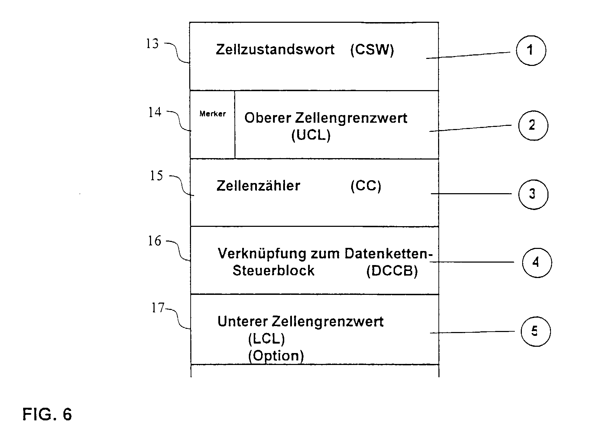

Die Details der Zellsteuerblocks 1, 2, 3,...n sind in Fig. 6 dargestellt. Jeder Zellsteuerblock kann folgende Angaben enthalten: ein Zellzustandswort 13, ein oberer Zellengrenzwert 14 mit einem Zustandsmerker, ein Zellenzähler 15, eine Verknüpfung zu einem Datenketten-Steuerblock 16 sowie ein unterer Zellengrenzwert 17. Das Zellzustandswort 13 ist ein Mehrbitwort, das kennzeichnet, ob eine von dem Zellsteuerblock gesteuerte Zelle benutzt oder unbenutzt ist, d.h., ob zuvor dieser Zellenstelle im Histogramm entsprechende Eingangsdaten während der Verweilzeit zugeordnet worden sind. Zu Beginn der Verweilzeit wird das Zellzustandswort auf null gesetzt, wodurch angezeigt wird, daß die Zellen noch nicht benutzt bzw. zugeordnet worden sind. Danach wird, wenn während des Zellsteuerblock-Zuordnungsschritts eine Zelle zugeordnet wird, dem Zellzustandswort des entsprechenden Zellsteuerblocks ein Wert ungleich null gegeben, entweder -1 oder ein positiver Wert. Handelt es sich bei der Zelle um eine Kernzelle, wie noch näher beschrieben wird, so ist das Zellzustandswort gleich -1. Handelt es sich bei der Zelle um eine Nichtkernzelle, so ist das Zellzustandswort ein positiver Wert, der eine Verknüpfung zu einer Kernzelle darstellt. Der Verknüpfungswert kann beispielsweise die Zellsteuerblocknummer der Kernzelle sein. Mit dem oberen Zellengrenzwert 14 werden die Eingangsdaten gefiltert, indem für die Anzahl der Ereignisse für die entsprechende, von dem Zellsteuerblock gesteuerte Zelle ein Grenzwert vorgegeben wird. Wird der Grenzwert überschritten, so wird das Ereignis nur gezählt, aber keine weitere Verarbeitung für den Ereignisbeschreibungsblock ausgeführt, und der nächste Ereignisbeschreibungsblocks wird verarbeitet. Der obere Zellengrenzwert 14 wird nur verwendet, wenn der Merker gleich 1 ist. Ist der Merker gleich null, so findet der Kettengrenzwert 72 Anwendung.

Der Zellenzähler 15 zählt die Anzahl der Ereignisse für die entsprechende Zelle innerhalb einer Verweilzeit. Null bedeutet, daß kein Ereignis stattgefunden hat. Die Verknüpfung 16 zum Datenketten-Steuerblock stellt eine Verbindung zu den Ausgangsdaten her, d.h. zu einem Datenketten-Steuerblock im Ausgabe-Datenfeld. Im Ausgabeschritt werden die Daten in Abhängigkeit von dieser Verknüpfung ausgelesen, und folglich wird durch diese Verknüpfung eine Sortierfunktion für das erfindungsgemäße Verfahren geschaffen. Ein unterer Zellengrenzwert 17 steht wahlweise ebenfalls zur Verfügung. Wenn die Anzahl der Ereignisse während einer Verweilzeit diese Zahl nicht überschreitet, so erfolgt keine Ausgabe der Ereignisse.

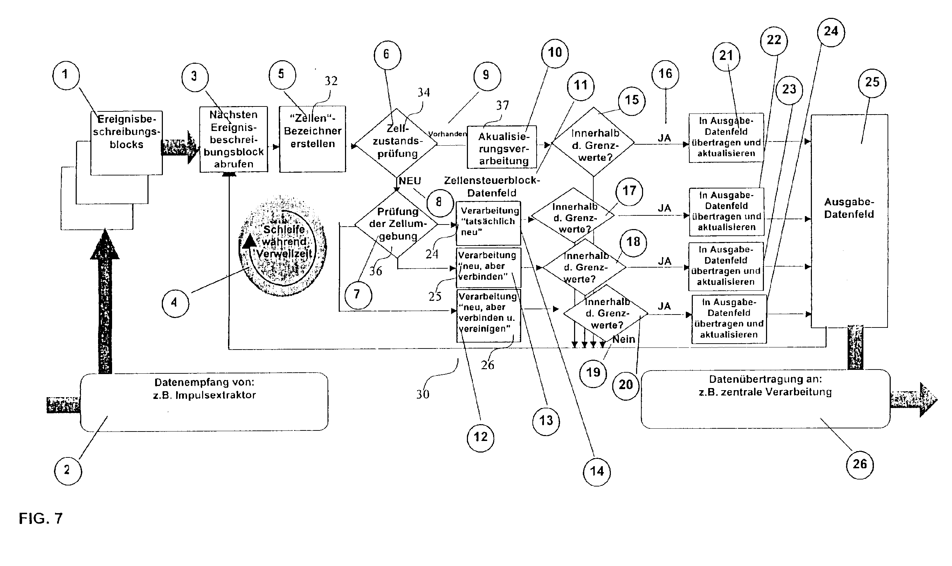

Fig. 7 zeigt einen allgemeinen Überblick über das erfindungsgemäße Verfahren, einschließlich den Sortierschritt 5 30. Die Daten werden von den Ereignisbeschreibungsblocks empfangen, und der Zellsteuerblock-Zuordnungsschritt 32 wird ausgeführt zur Bestimmung, ob das Ereignis einem Zellsteuerblock im Histogramm entspricht. Trifft dies zu, so erfolgt in Schritt 34 eine Prüfung des Zellzustandsworts 13 (siehe Fig. 6) in diesem Zellsteuerblock zur Bestimmung, ob die Zelle unbenutzt oder benutzt ist.

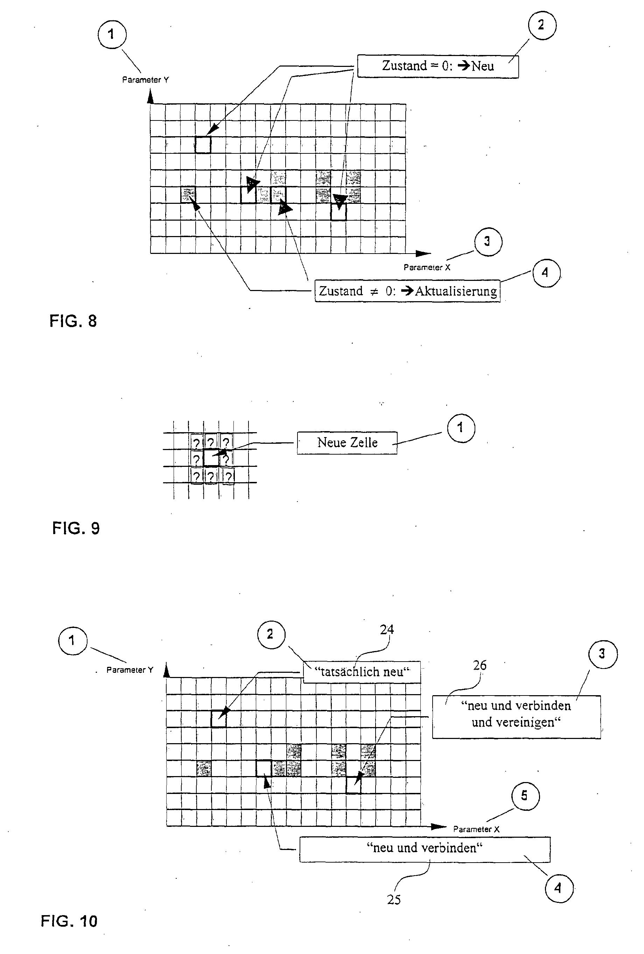

In Fig. 8 ist das Verfahren der Zellzustandsprüfung des Schrittes 34 dargestellt. Jede Zelle ist entweder benutzt oder unbenutzt, was in Schritt 34 durch Prüfung, ob das Zellzustandswort eines Zellzustandsblocks null oder ungleich null ist, ermittelt wird.

Ist die Zelle unbenutzt, d.h. neu, so wird in Schritt 36 die Zellumgebung geprüft, d.h. die die zugeordnete Zelle umgebenden Zellsteuerblocks werden geprüft, wie in Fig. 9 dargestellt.

Wie in Fig. 7 und 10 gezeigt, umfaßt das Sortierverfahren drei Unterverfahren, wenn der zugeordnete Zellsteuerblock als unbenutzt, bzw. neu bestimmt wird. Die Unterverfahren umfassen ein "tatsächlich neu"-Unterverfahren 24 zur Bestimmung, ob der zugeordnete Zellsteuerblock tatsächlich neu ist, d.h., daß keine Umgebungszellen benutzt sind, und ein "neu und verbinden"-Unterverfahren 25 zur Bestimmung, ob der zugeordnete Zellsteuerblock neu und mit einem bereits benutzten Zellsteuerblock in dem Histogramm verbindbar ist, d.h., daß eine der Umgebungszellen benutzt ist. Bei dem dritten Unterverfahren handelt es sich um ein "neu und verbinden und vereinigen"-Unterverfahren 26 zur Bestimmung, ob der zugeordnete Zellsteuerblock neu ist und mit 5 mehr als einer unabhängigen Zellsteuerblock-Gruppe verbindbar ist, also zwei unabhängige Zellsteuerblock-Gruppen vereinigen kann.

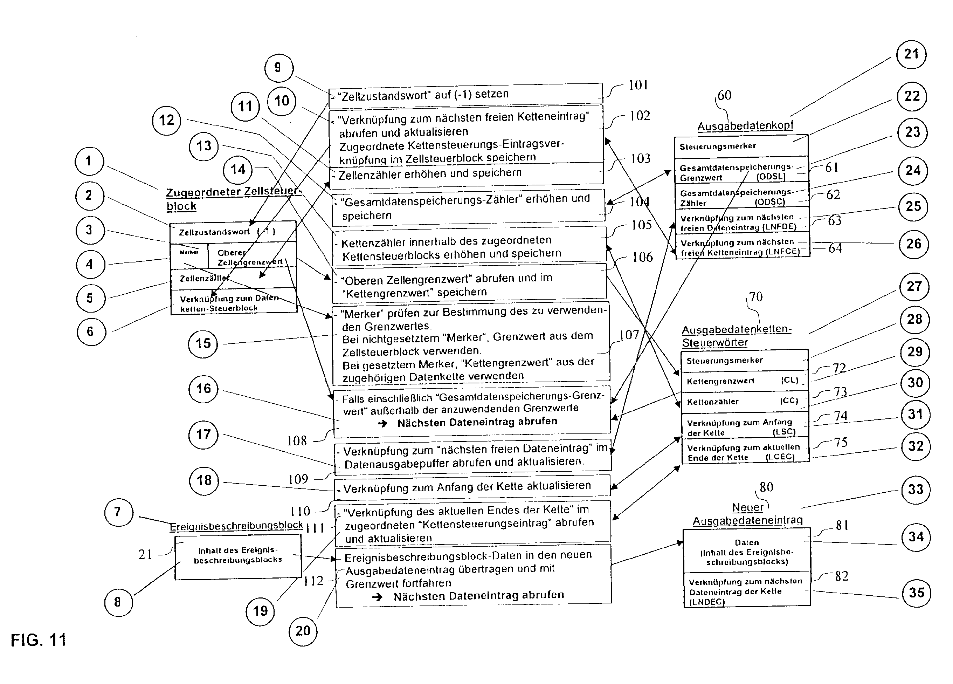

Wenn keine Umgebungszellen benutzt sind, so wird das "tatsächlich neu"-Unterverfahren ausgeführt. Das "tatsächlich neu"-Unterverfahren ist in Fig. 11 beschrieben. Zunächst wird in Schritt 101 das Zellzustandswort von null auf -1 gesetzt. Dann wird in Schritt 102 aus einem Datenausgabekopf die Verknüpfung zu einem nächsten freien Ketteneintrag in einem Datenausgabekopf abgerufen, und die Kettensteuerungs-Eintragsverknüpfung wird in der Verknüpfung zum Datenketten-Steuerblock im Zellsteuerblock gespeichert. Der Zellenzähler wird in Schritt 103 um eins erhöht, ebenso wie der Gesamtdatenspeicherungs-Zähler im Ausgabedatenkopf in Schritt 104. Der Kettenzähler in den Ausgabedatenketten-Steuerwörtern wird in Schritt 105 dann um eins erhöht. Der obere Zellengrenzwert wird dann in Schritt 106 aus dem Zellsteuerblock abgerufen und in einem Kettengrenzwert-Wort eines Ausgabedatenketten-Steuerblocks gespeichert. Je nach Zustand des Merkers in dem zugeordneten Zellsteuerblock wird dann in Schritt 107 entweder der obere Zellengrenzwert (Merker = 0) oder der Kettengrenzwert (Merker = 1) verwendet. Liegt das Ereignis außerhalb des oberen Zellengrenzwertes oder des Kettengrenzwertes, bzw. außerhalb des Gesamtdatenspeicherungs-Grenzwertes des Ausgabedatenkopfes, so werden keine weiteren Schritte unternommen, und der nächste Dateneingang wird abgerufen, wie in Schritt 108 dargestellt. Liegt es innerhalb der Grenzwerte, so wird in Schritt 109 die Verknüpfung zu einem nächsten freien Dateneintrag aus dem Ausgabedatenkopf abgerufen, welcher anschließend aktualisiert wird. Die Verknüpfung zum Anfang der Kette wird in Schritt 110 aktualisiert, ebenso wie die Verknüpfung zum aktuellen Ende der Kette in Schritt 111. In Schritt 112 werden die Ereignisbeschreibungsblock-Daten dann schließlich in einen neuen Datenausgabeeintrag übertragen. Dann wird ein neuer Dateneingang verarbeitet.

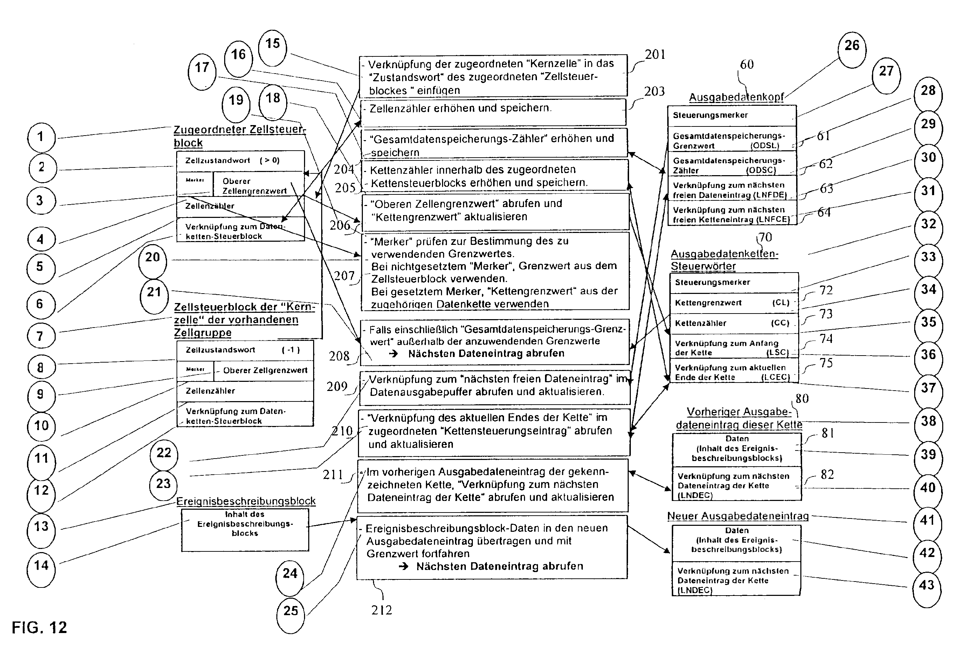

Das in Fig. 12 dargestellte "neu und verbinden"-Unterverfahren wird ausgeführt, wenn festgestellt wird, daß eine Zellsteuerblock-Gruppe an den zugeordneten Zellsteuerblock angrenzt. Es erfolgt die Bestimmung der Kernzelle der angrenzenden Zellgruppe (im Zellzustandswort durch -1 gekennzeichnet). In Schritt 201 wird dann die Adresse dieser Kernzelle im Zellzustandswort des zugeordneten Zellsteuerblocks gespeichert. In den nächsten Schritten 203, 204, 205, 206, 207, 208 und 209 wird jeweils so verfahren wie bei den Schritten 103, 104, 105, 106, 107, 108 und 109 des "tatsächlich neu"-Unterverfahrens. Die Verknüpfung zum Ende der aktuellen Kette für diese Kernzellengruppe wird dann in Schritt 210 aktualisiert, die Verknüpfung zum nächsten Dateneintrag dieser Kette wird im vorherigen Ausgabedateneintrag in Schritt 211 aktualisiert, und ein neuer Ausgabedateneintrag wird in Schritt 212 gebildet.

Unter Bezugnahme auf Fig. 11 und Fig. 12 läßt sich die Ausgabe der Daten näher erläutern. Mit jeder neuen Kernzelle beginnt eine neue Kette, wobei in Schritt 110 im Ausgabedatenketten-Steuerwort 70 für die Kette an der Stelle 74 eine Verknüpfung zum Anfang der Kette erstellt wird. Dies ist eine Verknüpfung zu dem ersten Dateneintrag in der Kette. Die Kette beginnt somit mit einer Kernzelle, und das "neu und verbinden"-Unterprogramm hängt an den Kernzellen-Dateneintrag zur Verlängerung der Kette einen neuen Datenausgabeeintrag an.

Für jedes neue Ereignis in der Kette, einschließlich dem ersten Ereignis, wird der Kettenzähler 73 erhöht (siehe Schritte 105 und 205), so daß die Anzahl der Ereignisse in dieser Kette gezählt wird. Durch einen Kettengrenzwert 72 wird ein Grenzwert für die für die aktuelle Kette erlaubte Anzahl von Ereignissen bereitgestellt. Die Verknüpfung zum aktuellen Ende der Kette 75 stellt die Adresse des letzten Dateneintrags der Kette bereit und wird während der Verweilzeit kontinuierlich aktualisiert.

Der in Fig. 11 dargestellte Ausgabedatenkopf 60 umfaßt allgemeine Ausgabedaten-Informationen für jede Verweilzeit und enthält einen Gesamtdatenspeicherungs-Grenzwert 61, mit dem die Anzahl der während einer Verweilzeit erfaßten Ereignisse begrenzt werden kann (siehe Schritte 107, 207). Der Gesamtdaten-Speicherungskopf 62 zählt die Anzahl der während einer Verweilzeit erfaßten Ereignisse. Die Verknüpfung zum nächsten freien Dateneintrag 63 stellt die Adresse des nächsten verfügbaren freien Dateneintrags bereit und wird während der Verweilzeit kontinuierlich aktualisiert. Die Verknüpfung zum nächsten freien Ketteneintrag stellt die Adresse des nächsten verfügbaren Datenketten-Steuerworteintrags bereit. Mit der Bildung neuer Ketten um Kernzellen wird dieser Eintrag aktualisiert (siehe Schritt 102). Der Ausgabedateneintrag 80 umfaßt die Daten des Ereignisbeschreibungsblocks an der Stelle 81 und eine Verknüpfung zum nächsten Dateneintrag der Kette 82. Diese Stelle bleibt leer bis ein nächster Dateneintrag in der Kette erfolgt. Die Adresse dieses nächsten Dateneintrags wird dann in die Verknüpfungstelle 82 übertragen.

Somit können um die Kernzellen Ketten gebildet und ausgegeben werden, so daß eine Sortierung der Daten in Gruppen mit ähnlichen Parametereigenschaften erfolgt.

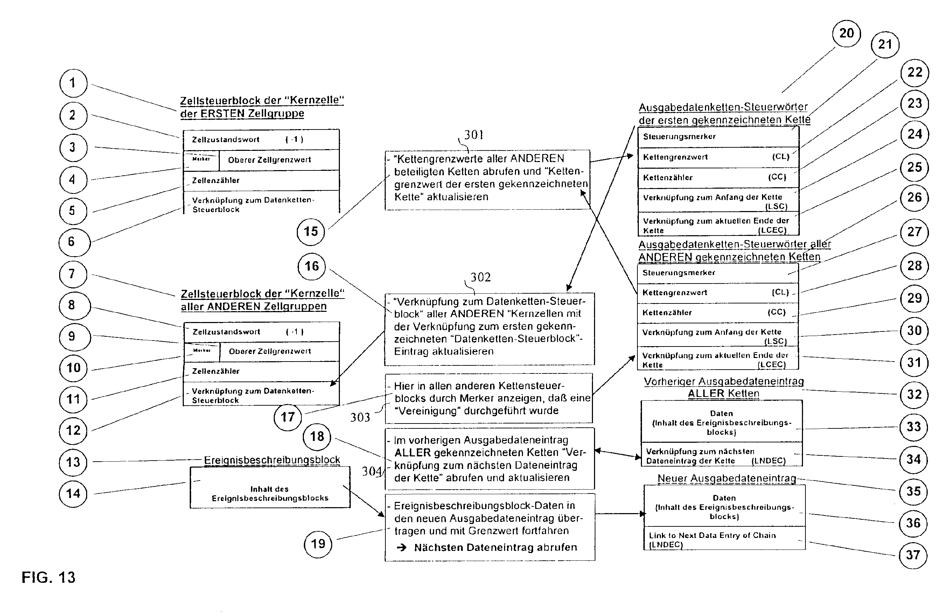

Fig. 13 zeigt das "neu und verbinden und vereinigen"-Unterverfahren, das ausgeführt wird, wenn mindestens zwei Gruppen mit Kernzellen vereinigt werden, d.h. mindestens eine weitere Kette aufgenommen wird. Wie in Fig. 11 dargestellt, arbeitet das "neu und verbinden und vereinigen"-Unterverfahren in ähnlicher Weise wie das "neu und verbinden"-Unterverfahren mit den folgenden zusätzlichen Schritten: In Schritt 301 werden die Kettengrenzwerte der anderen beteiligten Ketten zu der ersten gekennzeichneten Kette hinzuaddiert. Die Kernzellen der anderen Ketten bzw. Zellgruppen werden in Schritt 302 mit der ersten gekennzeichneten Kette verbunden. In Schritt 303 wird die Verknüpfung zum aktuellen Kettenende in den anderen Ketten-Steuerwörtern zur Anzeige einer erfolgten Vereinigung aktualisiert. In Schritt 304 werden dann die Verknüpfungen in den vorherigen Ausgabedateneinträgen der ersten Kette und der anderen Kette aktualisiert.

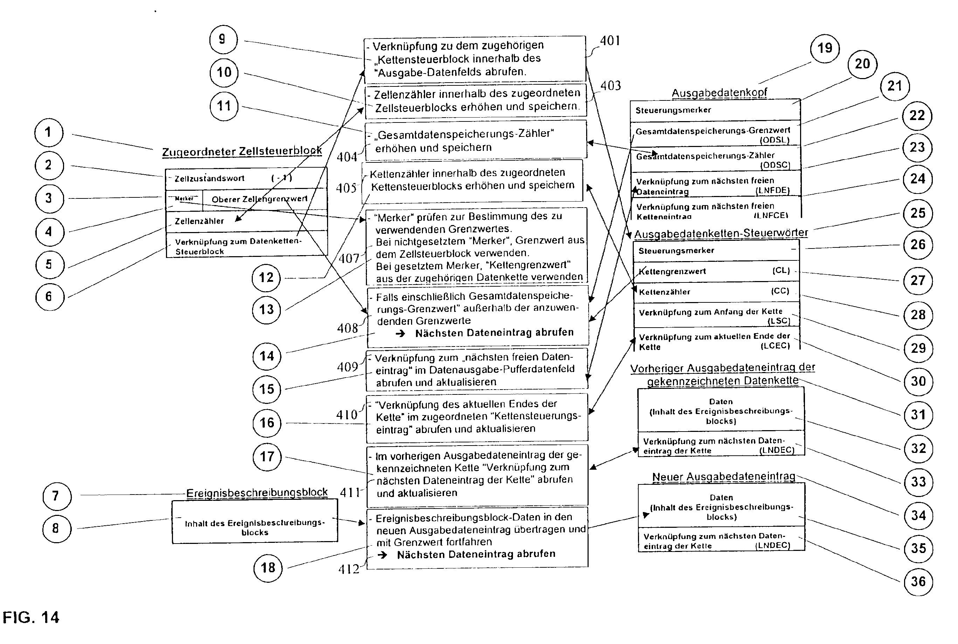

Wie in Fig. 7 gezeigt, wird, wenn der aus den Eingangsdaten zugeordnete Zellsteuerblock im Histogramm bereits benutzt ist, in Schritt 37 ein Aktualisierungs-Verarbeitungsprogramm ausgeführt. Es sind zwei Unterprogramme vorhanden: eines für eine Kernzelle und das andere für eine Nichtkernzelle. Fig. 14 zeigt das Aktualisierungs-Verarbeitungsprogramm, wenn eine benutzte Kernzelle erkannt wurde. In Schritt 401 wird die Verknüpfung zu dem zugehörigen Kettensteuerblock innerhalb des Ausgabe-Datenfelds abgerufen, d.h. der Kettensteuerblock für die Kette der Kernzelle. Die Unterprogramm-Schritte 403, 404, 405, 407, 408, 409, 410, 411 und 412 folgen dann den Schritten 203, 204, 205, 207, 208, 209, 210, 211 und 212 wie in Fig. 12. Das Kernzellen-Aktualisierungsprogramm in Fig. 14 hat jedoch keinen, dem Schritt 206 der Fig. 12 entsprechenden Schritt, der Kettengrenzwert wird nicht abgerufen, da er bereits gesetzt worden ist.

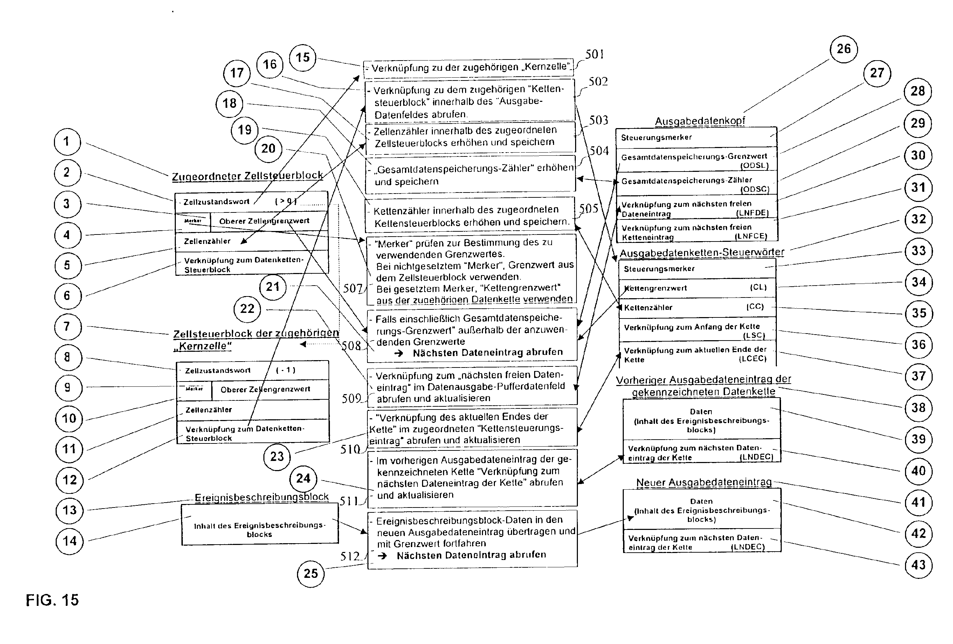

Fig. 15 zeigt das Aktualisierungs-Verarbeitungsprogramm, wenn eine benutzte Nichtkernzelle erkannt worden ist. In Schritt 501 wird zunächst das Zellzustandswort gelesen, das die Verknüpfung zu der Kernzelle herstellt. Die Verknüpfung zu dem Datenketten-Steuerblock für die richtige Kette wird in Schritt 502 aus der Kernzelle abgerufen. Die Unterprogramm-Schritte 503, 504, 505, 507, 508, 509, 510; 511 und 512 folgen dann ähnlich den Schritten 403, 404, 405, 407, 408, 409, 410, 411 und 412 in Fig. 14.

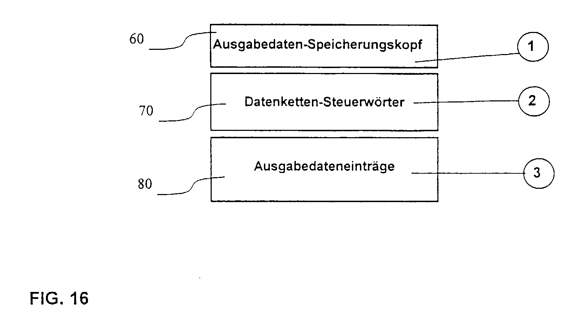

Wie in Fig. 16 dargestellt, dient das Ausgabe-Datenfeld der Datenausgabe und umfaßt einen Ausgabedaten-Speicherungskopf 60, Datenketten-Steuerwörter 70 für jede Kette und die Ausgabedateneinträge 80.

Nach Beendigung einer Verweilzeit werden die verschiedenen Datenketten ausgelesen, so daß vorsortierte Datengruppen ähnlicher Parameter weitererarbeitet werden können. Vor der nächsten Verweilzeit erfolgt die Initialisierung, mit der der Eingangs-FIFO-Speicher gesäubert sowie die Sortierparameter, die Zellsteuerblocks und das Ausgabe-Datenfeld initialisiert werden. Die Säuberung des FIFO-Speichers beinhaltet lediglich die Entfernung der Speicherinhalte aus dem FIFO-Speicher. Die Initialisierung der Sortierparameter umfaßt die Auswahl der für die Sortierung relevanten Parameter und stellt die Anzahl der für die Berechnung des Zellenbezeichners zu verwendenden höchstwertigsten Bits (MSBs = most significant bits) bereit. Die zu verwendenden Parameter können von einem zentralen Steuerprozessor empfangen werden.

Es können auch Standard-Zellsteuerblock-Datenfelder, also verschiedene vorgespeicherte Histogramme bereitgestellt werden.

Die Initialisierung des Ausgabe-Datenfelds beinhaltet die Bereitstellung einer Dateneingabe für den Gesamtdatenspeicherungs-Grenzwert. Die Anzahl der maximal erlaubten Ereignisse für jede Verweilzeit sowie eine maximal erlaubte Anzahl von Datenketten wird auf diese Weise festgelegt. Darüber hinaus werden die Felder für die Verknüpfung zu freien Daten- und Ketteneinträgen auf null gesetzt.

## Patentansprüche

1. Verfahren zur Sortierung von Daten mit den Verfahrensschritten
- Erstellen eines Zellsteuerblock-Datenfelds zur Bildung eines Histogramms, wobei das Histogramm eine Vielzahl von Zellsteuerblocks aufweist, wobei jeder Zellsteuerblock der Vielzahl von Zellsteuerblocks einer entsprechenden, als Kernzelle bzw. Nichtkernzelle sowie benutzt bzw. unbenutzt klassifizierbaren Zelle entspricht, und wobei jeder Zellsteuerblock der Vielzahl von Zellsteuerblocks einen Zellenzähler aufweist, der inkrementiert wird, wenn die entsprechende Zelle durch ein Eingangsereignis erkannt wird, und wobei jeder Zellsteuerblock der Vielzahl von Zellsteuerblocks ein erstes Verknüpfungsswort zum Verweis auf den Anfang einer Datenausgabekette, wenn die entsprechende Zelle benutzt und Kernzelle ist, aufweist, und wobei jeder Zellsteuerblock der Vielzahl von Zellsteuerblocks ein zweites Verknüpfungsswort zum Verweis auf eine zugehörige Kernzelle, wenn die entsprechende Zelle benutzt und Nichtkernzelle ist, aufweist, und wobei das Histogramm eine Funktion von wenigstens einem Parameter, einschließlich eines ersten Parameters ist, und für den ersten Parameter einen ersten unteren Grenzwert und einen ersten oberen Grenzwert aufweist;
- Empfangen von Eingangsdaten in Abhängigkeit von dem wenigstens einen Parameter zur Bildung einer Vielzahl von Ereignisbeschreibungsblocks, wobei der wenigstens eine Parameter den ersten Parameter einschließt;
- Ermitteln, ob jeder Ereignisbeschreibungsblock der Vielzahl von Ereignisbeschreibungsblocks einem Zellsteuerblock der Vielzahl von Zellsteuerblocks in dem Histogramm entspricht, und, in diesem Falle, Ermitteln, ob die entsprechende Zelle des einen Zellsteuerblocks benutzt oder unbenutzt ist, und, falls die entsprechende Zelle unbenutzt ist, Ändern einer Klassifizierung des Zellsteuerblocks von unbenutzt in benutzt; und
- Ausgeben der Eingangsdaten der Vielzahl von Ereignisbeschreibungsblocks an ein Ausgabe-Datenfeld in Abhängikeit von dem ersten und zweiten Verknüpfungsswort.

2. Verfahren nach Anspruch 1, dadurch gekennzeichnet, daß der wenigstens eine Parameter zusätzlich einen zweiten Parameter umfaßt.

3. Verfahren nach Anspruch 1, dadurch gekennzeichnet, daß die Ausgabe der Eingangsdaten nach einer gewissen Zeitspanne erfolgt.

4. Verfahren nach Anspruch 1, dadurch gekennzeichnet, daß vor dem Ermitteln, ob jeder Ereignisbeschreibungsblock der Vielzahl von Ereignisbeschreibungsblocks einem Zellsteuerblock der Vielzahl von Zellsteuerblocks entspricht, die Vielzahl von Zellsteuerblocks als unbenutzt klassifiziert wird.

5. Verfahren nach Anspruch 1, dadurch gekennzeichnet, daß die Vielzahl von Zellsteuerblocks einen durch einen Ereignis-Beschreibungsblock zugeordneten Eingangsereignis-Zellsteuerblock sowie diesen Zellsteuerblock umgebende Umgebungszellsteuerblocks umfaßt, und, falls der Eingangsereignis-Zellsteuerblock als unbenutzt bestimmt wird, weiterhin umfassend das Ermitteln, ob wenigstens einer der Umgebungszellsteuerblocks benutzt ist.

6. Verfahren nach Anspruch 5, weiterhin umfassend das Kennzeichnen der entsprechenden Zelle des ersten Zellsteuerblocks als Kernzelle, wenn alle Umgebungszellsteuerblocks unbenutzt sind.

7. Verfahren nach Anspruch 5, weiterhin umfassend das Verknüpfen des Eingangsereignis-Zellsteuerblocks mit einer Kernzelle, wenn nur eine der Umgebungszellen als benutzt klassifiziert ist.

8. Verfahren nach Anspruch 5, weiterhin umfassend das Verknüpfen des Eingangsereignis-Zellsteuerblocks mit einer Kernzelle, wenn wenigstens eine der Umgebungszellen als benutzt klassifiziert ist.

9. Verfahren nach Anspruch 1, dadurch gekennzeichnet, daß, wenn der eine Zellsteuerblock als benutzt bestimmt wird, weiterhin beinhaltet ist, daß ermittelt wird, ob der eine Zellsteuerblock eine Kernzelle oder eine zugehörige Nichtkernzelle ist.

10. Verfahren nach Anspruch 9, dadurch gekennzeichnet, daß, wenn der eine Zellsteuerblock eine Kernzelle ist, weiterhin beinhaltet ist, daß ermittelt wird, ob ein Grenzwert überschritten worden ist, und, in diesem Falle, die Eingangsdaten gezählt und dann verworfen werden.

11. Verfahren nach Anspruch 9, dadurch gekennzeichnet, daß, wenn der eine Zellsteuerblock eine zugehörige Nichtkernzelle ist, weiterhin beinhaltet ist, daß eine Verknüpfung von dem einen Zellsteuerblock zu einer zugehörigen Kernzelle erstellt wird.

12. Verfahren nach Anspruch 1, dadurch gekennzeichnet, daß, der wenigstens eine Parameter den ersten Parameter und n-1 weitere Parameter umfaßt, wobei das Histogramm n-dimensional ist.

13. Verfahren zur Sortierung von Daten mit den Verfahrensschritten
- Auswählen wenigstens eines Parameters zum Sortieren der Daten;
- Bildung eines Zellsteuerblock-Datenfelds in Abhängigkeit des wenigstens einen Parameters, wobei das Zellsteuerblock-Datenfeld eine Vielzahl von Zellsteuerblocks zum Sortieren der Daten in Ausgabedatenketten mit ähnlichen Werten des wenigstens einen Parameters aufweist, wobei wenigstens ein Zellsteuerblock der Vielzahl von Zellsteuerblocks ein erstes Verknüpfungswort zum Verweis auf den Anfang von einer der Datenausgabeketten aufweist; und
- Empfangen der Eingangsdaten in Abhängigkeit von dem wenigstens einen Parameter.

14. Verfahren zur Sortierung von Daten in einem Erkennungssystem mit den Verfahrensschritten
- Erstellen eines Zellsteuerblock-Datenfelds zur Bildung eines Histogramms, wobei das Histogramm eine Vielzahl von Zellsteuerblocks aufweist, wobei jeder Zellsteuerblock der Vielzahl von Zellsteuerblocks einer entsprechenden, als Kernzelle bzw. Nichtkernzelle sowie benutzt bzw. unbenutzt klassifizierbaren Zelle entspricht, und wobei jeder Zellsteuerblock der Vielzahl von Zellsteuerblocks einen Zellenzähler aufweist, wobei der Zellenzähler inkrementiert wird, wenn die entsprechende Zelle durch ein Eingangsereignis erkannt wird, und wobei jeder Zellsteuerblock der Vielzahl von Zellsteuerblocks ein erstes Verknüpfungsswort zum Verweis auf den Anfang einer Datenausgabekette, wenn die entsprechende Zelle benutzt und Kern Kernzelle ist, aufweist, und wobei jeder Zellsteuerblock der Vielzahl von Zellsteuerblocks ein zweites Verknüpfungsswort zum Verweis auf eine zugehörige Kernzelle, wenn die entsprechende Zelle benutzt und Nichtkernzelle ist, aufweist, und wobei das Histogramm eine Funktion von wenigstens einem Parameter, einschließlich eines ersten Parameters ist, und für den ersten Parameter einen ersten unteren Grenzwert und einen ersten oberen Grenzwert aufweist;
- Empfangen von Eingangsdaten in Abhängigkeit von dem wenigstens einen Parameter zur Bildung einer Vielzahl von Ereignisbeschreibungsblocks, wobei der wenigstens eine Parameter den ersten Parameter einschließt;
- Ermitteln, ob jeder Ereignisbeschreibungsblock der Vielzahl von Ereignisbeschreibungsblocks einem Zellsteuerblock der Vielzahl von Zellsteuerblocks in dem Histogramm entspricht, und, in diesem Falle, Ermitteln, ob die entsprechende Zelle des einen Zellsteuerblocks benutzt oder unbenutzt ist, und, falls die entsprechende Zelle unbenutzt ist, Ändern einer Klassifizierung der entsprechenden Zelle im Zellsteuerblock von unbenutzt in benutzt; und
- Ausgeben der Eingangsdaten der Vielzahl von Ereignisbeschreibungsblocks an ein Ausgabe-Datenfeld in Abhängikeit von dem ersten und zweiten Verknüpfungsswort.

15. Verfahren nach Anspruch 14, dadurch gekennzeichnet, daß der erste Parameter eine von dem Erkennungssystem erfaßte fortgepflanzte Frequenz von Signalen oder Wellen ist.

16. Verfahren nach Anspruch 14, dadurch gekennzeichnet, daß der wenigstens erste Parameter zusätzlich einen zweiten Parameter umfaßt, wobei der erste Parameter eine von dem Erkennungssystem erfaßte fortgepflanzte Frequenz von Signalen oder Wellen ist, und wobei der zweite Parameter eine erfaßte Ankunftsrichtung der von dem Erkennungssystem erfaßten Signale oder Wellen ist.

17. Verfahren nach Anspruch 16, dadurch gekennzeichnet, daß das Histogramm für die erfaßte Ankunftsrichtung eine erste Winkeluntergrenze und eine erste Winkelobergrenze aufweist, und daß der erste untere Grenzwert eine Frequenzuntergrenze und der erste obere Grenzwert eine Frequenzobergrenze ist, so daß ein zweidimensionales Histogramm gebildet wird.

18. Verfahren nach Anspruch 16, dadurch gekennzeichnet, daß das Erkennungssystem eine Radarwarneinrichtung, eine elektronische unterstützende Meßeinrichtung oder eine elektronische Aufklärungseinrichtung ist.

19. Vorrichtung mit einem Speichermedium, wobei das Speichermedium einen Befehlssatz aufweist, wobei der Befehlssatz zur Durchführung eines Verfahrens zur Sortierung von Daten von wenigstens einem Prozessor ausführbar ist, wobei der Befehlssatz bei der Ausführung folgende Schritte umfaßt:
- Erstellen eines Zellsteuerblock-Datenfelds zur Bildung eines Histogramms, wobei das Histogramm eine Vielzahl von Zellsteuerblocks aufweist, wobei jeder Zellsteuerblock der Vielzahl von Zellsteuerblocks einer entsprechenden, als Kernzelle bzw. Nichtkernzelle sowie benutzt bzw. unbenutzt klassifizierbaren Zelle entspricht, und wobei jeder Zellsteuerblock der Vielzahl von Zellsteuerblocks einen Zellenzähler aufweist, wobei der Zellenzähler inkrementiert wird, wenn die entsprechende Zelle durch ein Eingangsereignis erkannt wird, und wobei jeder Zellsteuerblock der Vielzahl von Zellsteuerblocks ein erstes Verknüpfungsswort zum Verweis auf den Anfang einer Datenausgabekette, wenn die entsprechende Zelle benutzt und Kernzelle ist, aufweist, und wobei jeder Zellsteuerblock der Vielzahl von Zellsteuerblocks ein zweites Verknüpfungsswort zum Verweis auf eine zugehörige Kernzelle, wenn die entsprechende Zelle benutzt und Nichtkernzelle ist, aufweist, und wobei das Histogramm eine Funktion von wenigstens einem Parameter,einschließlich eines ersten Parameters ist, und für den ersten Parameter einen ersten unteren Grenzwert und einen ersten oberen Grenzwert aufweist;
- Empfangen von Eingangsdaten in Abhängigkeit von dem wenigstens einen Parameter zur Bildung einer Vielzahl von Ereignisbeschreibungsblocks, wobei der wenigstens eine Parameter den ersten Parameter einschließt;
- Ermitteln, ob jeder Ereignisbeschreibungsblock der Vielzahl von Ereignisbeschreibungsblocks einem Zellsteuerblock der Vielzahl von Zellsteuerblocks in dem Histogramm entspricht, und, in diesem Falle, Ermitteln, ob die entsprechende Zelle des einen Zellsteuerblocks benutzt oder unbenutzt ist, und, falls die entsprechende Zelle unbenutzt ist, Ändern einer Klassifizierung der entsprechenden Zelle im Zellsteuerblock von unbenutzt in benutzt; und
- Ausgeben der Eingangsdaten der Vielzahl von Ereignisbeschreibungsblocks an ein Ausgabe-Datenfeld in Abhängikeit von dem ersten und zweiten Verknüpfungsswort.

20. Die Vorrichtung nach Anspruch 19, dadurch gekennzeichnet, daß der wenigstens eine Prozessor ein Signalprozessor eines Erkennungssystems ist.
